# EUROPEAN PATENT APPLICATION

(11) **EP 4 668 755 A2**
(43) Date of publication of application: **24.12.2025**
(21) Application number: 25184239.9
(22) Date of filing: 20.06.2025
(51) Int. Cl.: H04N 21/231, H04N 21/2343, H04N 21/2747, H04N 21/4335, H04N 21/845, H04N 21/8549, H04N 21/442, H04N 21/466, H04N 21/475, H04N 21/81, H04N 7/18, G06V 10/00, H04L 67/565, H04N 19/40

(54) **DYNAMIC MEDIA STORAGE RETENTION**

(30) Priority: 21.06.2024 US 202463662556 P; 17.06.2025 US 202519241143
(71) Applicant: Tyco Fire & Security GmbH, 8212 Neuhausen am Rheinfall (CH)
(72) Inventor: MCCAMBRIDGE, John, 8212 Neuhausen am Rheinfall (CH); FEE, Paul, 8212 Neuhausen am Rheinfall (CH); NEILL, Terence, 8212 Neuhausen am Rheinfall (CH); DENNIS, Kevin, 8212 Neuhausen am Rheinfall (CH)
(74) Representative: Meissner Bolte Nürnberg

(57) **Abstract**

Apparatus and methods are provided for dynamic media storage retention. The aspects include configuring a memory to store multiple versions of media content as primary video streams and auxiliary video streams with different resolutions by: configuring the memory to store the primary video streams at least some of which are manually selected from a user input; and configuring the memory to store the auxiliary video streams as automatically selected responsive to content interest level statistics of the primary video streams. The aspects include storing the multiple versions of the media content as the primary video streams and the auxiliary video streams with different resolutions.

## Description

### CROSS REFERENCE TO RELATED APPLICATIONS

This application claims priority to U.S. Patent Application No. 19/241,143, filed June 17, 2025, and U.S. Patent Provisional No. 63/662,556, filed June 21, 2024, the entire contents of which are hereby incorporated by reference herein.

### BACKGROUND

This disclosure relates generally to video recorders, more particularly, to dynamic media storage retention for use by video recorders. The invention relates in particular to a method for dynamic media storage retention and to a system for dynamic media storage retention.

Archived/cloud storage is an issue in the industry of video recording and retention. The issue stems from a need to provide video clients with different stream profiles depending on their needs, such as low or high bandwidth, low or high resolution, and so forth. Users have a number of differing demands relating to storage and use of the videos, and these demands can conflict with the amount of the finite storage that is available. For example, typically there is one recorded stream to provide a certain stream profile and another recorded stream to provide a different stream profile to the client without having to transcode on a server, which is a process limited by hardware resources. These recorded streams have a set retention period based on either a configured time frame or until the storage medium is full. When the storage medium is full or media outlives the configured retention period, the retention policy will cull older media to free up space for new recording. The problem with this process is that multiple streams have increased storage requirements. For cloud storage solutions, this could be an increased cost to the user and for local "hard disk" storage recording additional streams could limit the overall retention period.

### SUMMARY

Embodiments and aspects according to the invention are, in particular, disclosed or defined in the appended claims.

According to aspects of the present disclosure, a method for dynamic media storage retention is provided. The method includes configuring a memory to store multiple versions of media content as primary video streams and auxiliary video streams with different resolutions by: configuring the memory to store the primary video streams at least some of which are manually selected from a user input; and configuring the memory to store the auxiliary video streams as automatically selected responsive to content interest level statistics of the primary video streams. The method further includes storing the multiple versions of the media content as the primary video streams and the auxiliary video streams with different resolutions

According to other aspects, a system for dynamic media storage retention is provided. The system includes one or more memories configured to store multiple versions of media content as primary video streams and auxiliary video streams with different resolutions by storing (i) the primary video streams at least some of which are manually selected from a user input, and (ii) the auxiliary video streams as automatically selected responsive to content interest level statistics of the primary video streams. The memory further includes one or more processors configured to (i) select at least some of the primary video streams responsive to the user input and (ii) automatically select the auxiliary video streams responsive to content interest level statistics of the primary video streams.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, wherein dashed lines may indicate optional elements, and in which:
**FIG. 1** is a block diagram of an example memory configured for dynamic media storage retention, in accordance with an example aspect.
**FIG. 2** is a block diagram of example memories configured for dynamic media storage retention, in accordance with an example aspect.
**FIG. 3** is a block diagram of an example dynamic media storage retention system configured for dynamic media storage retention, in accordance with an example aspect.
**FIG. 4** is a block diagram of an example another dynamic media storage retention system, in accordance with an example aspect.
**FIG. 5** is a flow diagram of an example method for dynamic media storage retention, in accordance with an example aspect.
**FIGS. 6-13** are further flow diagrams of further steps of the method for dynamic media storage retention of **FIG. 5****,** in accordance with an example aspect.

### DETAILED DESCRIPTION

Aspects of the present disclosure are directed to dynamic media storage retention. Aspects of the present disclosure propose a system and a method wherein recorded video streams could have different retention times allowing for primary and auxiliary recording. In an aspect, primary recording relates to storing media in a primary storage area for user-based storage requirement implementations, while auxiliary recording relates to storing media in an auxiliary storage area where intelligent retention and culling (e.g., as described herein) are employed.

In an aspect, the current method of setting a retention scheme would still exist for a primary, user configured, recording but aspects of the present disclosure would allow a user to configure an auxiliary portion of storage they would like to use for dynamic retention. The auxiliary streams stored in the auxiliary portion, which could be extra streams from a camera, or previously transcoded streams on the server which were kept for future use, would then have this pool of storage available so that the recorder can retain the stream profiles the recorder expects the client to request.

In an aspect, this expectation may be based on Artificial Intelligence (AI) logic and/or machine learning models which analyze client requests to generate predictions on which recordings are likely to be interesting to the user. Aspects of the present disclosure allow having the streams ready for access instead of having to transcode them to the client.

Examples of how the system could deduce why the content is interesting, and hence should be retained for a longer time period, include but are not limited to:
- The content has been watched before (e.g., X or more times, where X is an integer greater than or equal to 1);
- The content has been watched multiple times or over a threshold number of times (e.g., Y or more times, where Y is an integer greater than or equal to 2 or greater than a threshold value), where the threshold number is a value that can be configured by a user based on historical analysis or based on an estimate of a tradeoff of a higher threshold storing less video and potentially missing to store some video versus a lower threshold that results in storing more videos and hence using more resources;
- The content has been watched by an "important user", e.g., a supervisor, rather than a "regular user" such as a security guard or other non-supervisory employee, where important users are kept in a list for reference, and where a user submitted identifier of an important user is compared to a list of pre-stored user identifiers of important people;
- The content covers time periods close to important events (e.g., a swearing-in ceremony) and alarms (e.g., forced door opening, item conversion detected (radio frequency tag removed, etc.));
- The content covers an important feature in a scene (e.g., a person, a doorway, a window, a cash register, a credit/debit card machine, an automatic teller machine, a display area (e.g., a jewelry counter), (a check-in counter and/or luggage loading section and/or plane holding section and/or so forth) at an airport, and so forth) as determined, e.g., by pattern matching objects in captured streams to pre-known objects in pre-known scenes; and
- Artificial Intelligence (AI) / machine learning (ML) scene classification has determined the scene includes high value objects (e.g., a doorway, a window, a cash register, a credit/debit card machine, an automatic teller machine, a display area (e.g., a jewelry counter), (a check-in counter and/or luggage loading section and/or plane holding section and/or so forth) at an airport, and so forth) or high value activity (e.g., a person is detected as falling or fallen, a crime is detected as occurring or occurred, a crash involving at least one motor vehicle is detected, and so forth). AI may be used to detect shapes (e.g., lines, curves) in scenes from which more complex shapes can be detected and compared against a database of pre-known objects in known scenes and affords more control over statistics based approaches in allowing for weighting of various features with greater weights than other features to ensure a proper prediction of a high value object or high value activity versus one of lesser value and of non or low importance.

In an aspect, intelligent retention and culling in accordance with the present disclosure can be considered to have ownership only over auxiliary recordings, whereby primary recordings remain under the control of manual user configuration. However, in other aspects, the present disclosure contemplates a different balance of responsibility such as, for example, more manual control if the intelligent culling feature proves troublesome under some circumstances, or the present disclosure contemplates fully automatic "value" deduction and intelligent culling if this feature proves trustworthy under other circumstances. For example, "low value (i.e., low interest) targets" such as fixed structures (e.g., walls) may be overridden to always keep the highest resolution, at a minimum, for potential "high value (i.e., high interest) targets" such as swearing in ceremonies (presidential, judicial, etc.) and/or spaces and/or items proximate to the swearing in ceremonies, register, point of sale (PPS) and/or other areas where money and/or other items of value are exchanged, items of a minimum threshold value (e.g., high value items), people (particularly, when two or more people are proximate to detect person-on-person crime, etc.), and so forth. Various levels of high resolution can be specified for use at high resolution including 1080, 4K, 8K, and so forth.

In using intelligent retention and culling, efficient storage policies may be implemented that are based on statistics (e.g., more interest and/or importance assigned based on, for example, whether: during business hours (e.g., 9-5); during days the business is open (e.g., bank: Mon.-Sat.); at important areas of the business (e.g., bank: teller areas; vault areas; and door areas); and so forth. While a business has been used in the preceding and other examples, a home, a facility (e.g., electric, gas, etc.), an installation (e.g., military, government, etc.), and so forth may benefit from the teachings of the present disclosure.

As a further example, maximum storage area is considered by the intelligent retention and culling algorithm in determining which resolutions to store. For example, for the case when the most frequent requests are made by smart phones, then the resolutions predicted for storage would be low resolution to coincide with the maximum storage area of what is known is typically known (a smart phone) as a slim device. In another aspect, these predictions can be balanced against historical and/or current values or otherwise be corrected to coincide to both historical and/or current values (e.g., by taking the mean, medium, or mode of historical and/or current values).

In an aspect, future use is predicted based on historical use. In this way, the cost of transcoding is spread out over time (e.g., by transcoding at non-streaming times when resources are presumably higher than at streaming times) versus conventional approaches that transcode on demand for a client device. In contrast, in an aspect, a camera stream may be taken at a given resolution and optionally transcoded and stored at one or more lower resolutions in an auxiliary portion of memory at times when such transcoding is convenient (e.g., typically during low processing times), where aspects of the present disclosure involve a primary storage area (e.g., for user-based storage requirement implementations) and an auxiliary storage (where intelligent retention and culling (e.g., as described herein) are employed). The primary storage area may store one or more high-definition streams for a given high value target as deemed by the user, e.g., based on user preference, applicable laws, and so forth. In contrast, where historically low-resolution streams are requested (e.g., for phone use), the system and/or method will anticipate (predict) this future need based on past needs and transcode the lower resolution streams when it is efficient to do so such as when processing time is otherwise at a minimum or below a threshold value.

Further to storage efficiency, for this auxiliary area in memory, a deletion policy may involve transcoding a higher resolution (e.g., a 32MP image or 4K video) item to a lower resolution (4MP or 640) item, deleting the high-resolution item, and keeping the lower resolution item.

Typically, conventional recorders provide one or two streams but these all have the same retention scheme, either time-based or until the storage is full.

In contrast, aspects of the present disclosure provide a mechanism wherein client usage metrics (e.g., number of times viewed, time of day viewed, type of device viewed on (thin device versus desktop computer), and/or a viewer title (e.g., president, vice president, supervisor, etc.) are used to predict future requested auxiliary video streams and a most appropriate resolution based on the client usage metrics. For example, a thin device such as a smart phone will better correspond to lower resolution auxiliary video streams than what is capable of being watched on a television set or desktop computer that presumably has more resources to support high-definition video streams. These statistics can be used to schedule transcoding by initiating such transcoding at times when resource consumption is low such as times when streaming is not being performed. Thus, for example, transcoding can be performed during work hours for entertainment video streams to be watched during non-work hours. Transcoding may also be performing during sleeping or night hours, however some people may stream at odd hours other than work, so work hours for transcoding seems an initially good default setting that may be adjusted accordingly based on statistics of viewing (times of viewing).

In other aspects of the disclosure, Artificial Intelligence (AI) logic and/or ML models may be applied to client usage metrics to determine which auxiliary video streams should be generated and for how long the auxiliary video streams should be stored.

Aspects of the present disclosure employ a separate allocation for auxiliary storage which allows for legacy culling rules to still be in effect in the primary storage area to enforce given policies and/or requirements and/or laws (e.g., governmental requirements and/or laws) while still providing dynamic media storage retention.

Aspects of the present disclosure could be implemented by having user defined retention on each stream rather than by AI determination.

Aspect of the present disclosure can also involve the concept of "record on alarm" in which the recorder keeps a short, rolling recording and whenever a predetermined event happens (motion detection/external sensor trigger for example) the recorder will record the video for the duration of the event and the recorder will then abide by the usual retention scheme.

Thus, the present disclosure introduces a dynamic media storage retention system that intelligently manages the retention of multiple versions of video streams by distinguishing between primary and auxiliary recordings. Primary recordings are stored according to user-defined requirements, while auxiliary recordings are managed by an intelligent retention policy that leverages artificial intelligence and user behavior analytics. The system automatically analyzes factors such as how often a video has been watched, who has viewed it, the proximity of the content to important events, and the presence of high-value objects or activities within the scene. Based on these content interest statistics, the system predicts which auxiliary streams are likely to be needed in the future and retains them accordingly, often at different resolutions to optimize storage space.

By separating storage pools for primary and auxiliary streams and applying differentiated retention policies, the present disclosure reduces unnecessary storage of low-value or rarely accessed content, minimizes the need for on-demand transcoding, and/or ensures that relevant video streams are readily available when requested. This approach may not only lower storage and processing costs but also may improve the user experience by providing faster access to important or frequently viewed content. The flexibility of the system allows for both manual and automated control over retention, enabling compliance with legal or organizational requirements while still benefiting from intelligent, data-driven storage optimization. Therefore, the present disclosure overcomes one or more issues with prior solutions by introducing a dynamic, adaptive, and efficient method for media storage retention that aligns with actual user needs and content value.

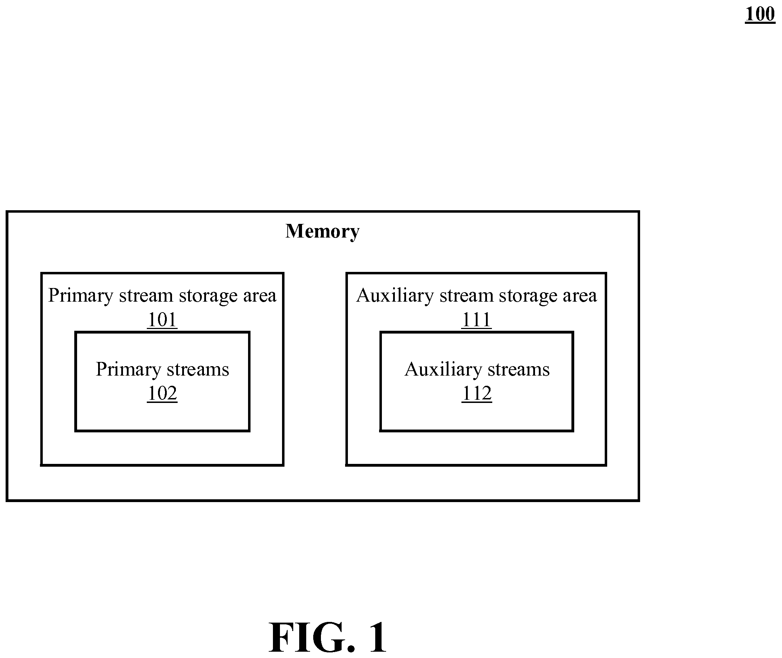

Referring to **FIG. 1****,** a memory 100 configured for dynamic media storage retention is shown, in accordance with an example aspect.

The memory 100 includes a primary video stream storage area 101 configured to store primary video streams 102 and an auxiliary video stream storage area 111 configured to store auxiliary video streams 112.

In an aspect, the storage areas 101 and 111 may have different properties including different access times. For example, in an aspect, a faster access time is provided for accessing auxiliary video streams 112 from memory 100 than primary video streams 102 from memory 100. In another aspect, a faster access time is provided for accessing primary video streams 102 from memory 100 than auxiliary video streams 112 from memory 100.

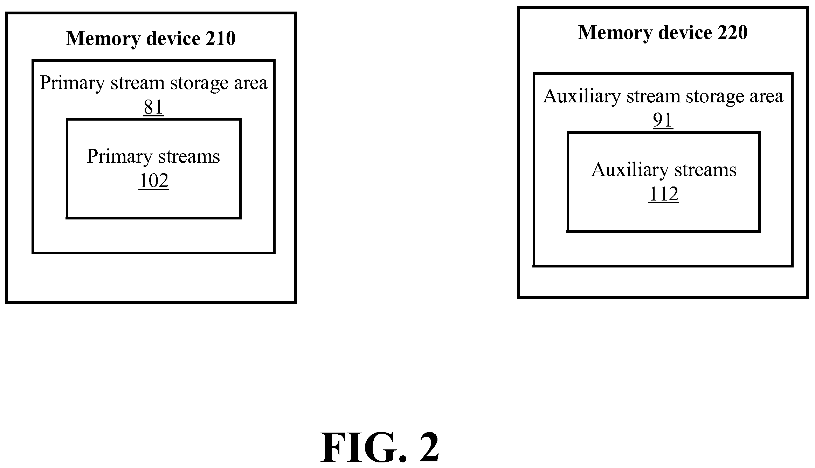

Referring to **FIG. 2****,** memories 210 and 220 used for dynamic media storage retention are shown, in accordance with an example aspect.

The memory 210 includes a primary video stream storage area 101 configured to store primary video streams 102.

The memory 220 includes an auxiliary video stream storage area 111 configured to store auxiliary video streams 112.

In an aspect, the memory 210 and the memory 220 are different types of memories (e.g., flash versus hard disk, and so forth) enabling different access times. In another aspect, the memory 210 and the memory 220 are the same memory type (e.g., both including hard disk coupled to flash drive, the latter for buffering). In an aspect, different access times may be enabled for different memory streams (primary video streams 102 versus auxiliary memory streams 112) stored in the same memory type. For example, in an aspect, a faster access time is provided for accessing auxiliary video streams 112 from memory 220 than primary video streams 102 from memory 210. In another aspect, a faster access time is provided for accessing primary video streams 102 from memory 210 than auxiliary video streams 112 from memory 220.

In an aspect, the memory 210 and the memory 220 are located at different geographical locations such that irrespective of their memory types, the memories 210 and 220 will have different access times based on incurred transmission delays. In an aspect, the memory 210 is a remote memory and the memory 220 is a local memory. In another aspect, the memory 210 is a local memory and the memory 220 is a remote memory.

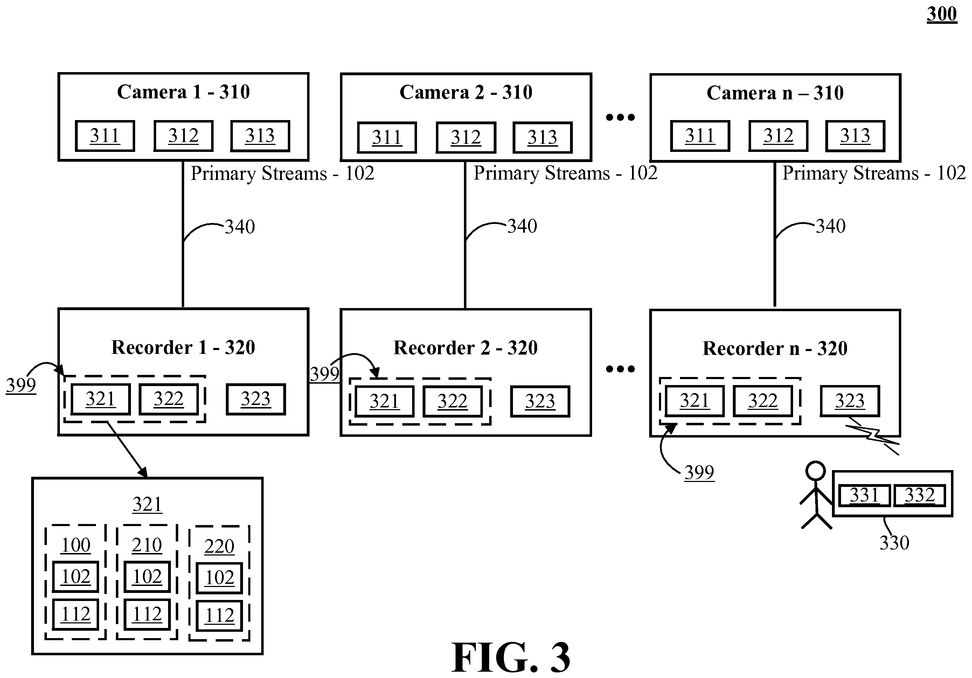

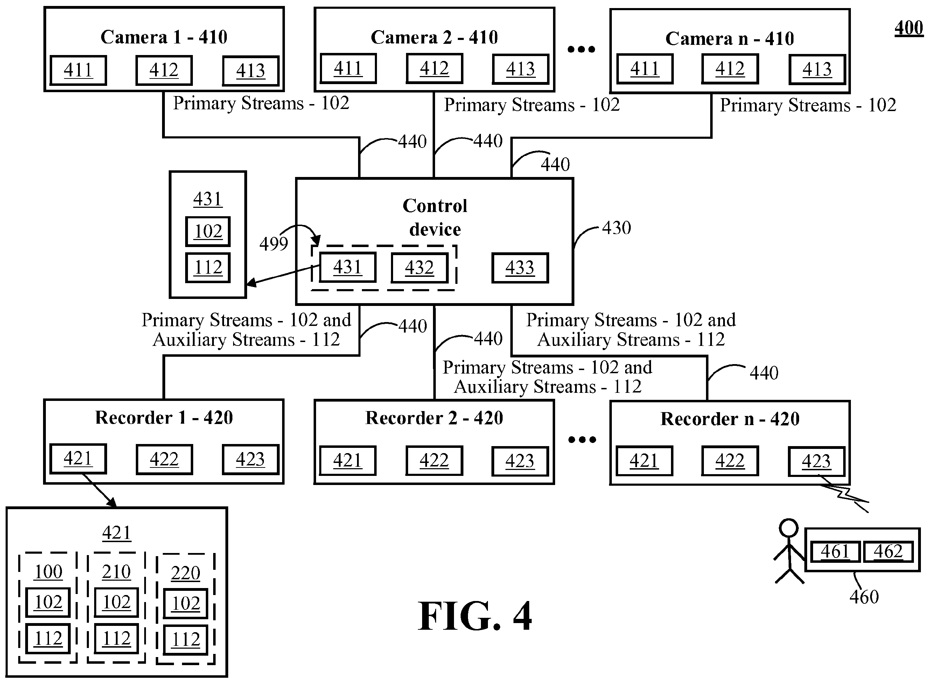

Primary video streams 102 are captured using cameras (shown in **FIG. 3** and **FIG. 4****)** and transcoded using a transcoder (shown in **FIG. 3** and **FIG. 4****).** Auxiliary video streams 112 may be up-sampled or down-sampled streams derived from the primary video streams 102. Preferably, the auxiliary video streams 112 are down sampled to provide lower resolution versions of the primary video streams 102.

Referring to **FIG. 3****,** an example dynamic media storage retention system 300 configured for dynamic media storage retention is shown, in accordance with an example aspect.

The system 300 includes a set of cameras 310 and a set of recorders 320, each numbered 1 to n, where n is a positive integer.

The set of cameras 310 is configured to capture video streams including primary video streams 102. The set of recorders 320 is configured to transcode the primary video streams 102 into auxiliary video streams 112 and record the primary video streams 102 and auxiliary video streams 112.

The set of camera 310 include one or more memories 311 configured to initially store primary video streams 102, one or more processors 312 configured to control the capturing of the primary video streams 102, and a transceiver 313 configured to transmit the primary video streams 102 to one or more of the recorders 320.

The set of recorders 320 are each enabled with at least one memory 321, including one or more memories 100, 210, 220, for storing primary video streams 102 and auxiliary video streams 112 and instructions for dynamic media storage retention. The recorders 320 are each enabled with one or more processors 322, that together with the instructions stored in the at least one memory 321, including the one or more memories 100, 210, 220, are capable of performing dynamic media storage retention. To that end, the set of recorders 320, when executing the instructions, can perform actions such as: selecting which auxiliary video streams 112 to transcode from primary video streams 102; determining the resolutions of the auxiliary video streams 112 to be transcoded; transcoding the primary video streams 102 into auxiliary video streams 112; managing deletion of both the primary video streams 102 and the auxiliary video streams 112 including, e.g., determining which auxiliary video streams 112 to generate and at what resolution in response to the deletion of a primary video stream 102; and so forth. Consequently, the one or more processors 322 and the at least one memory 321 including the one or more memories 100, 210, 220 may form a transcoder 399.

In an aspect, a computer, smart phone, or other processor enabled device 330 having a user input interface 331 may be used to input information into the recorders 320 via a transceiver 332 to enable the recorders 320 to make decisions including autonomous decisions on what primary video streams 102 to transcode and when to transcode (preferably spreading the transcoding costs over time to minimize over-utilizing processing resources at any given time).

In an aspect, cameras 310 and recorders 320 are connected by one or more communication links 340 that may be wired or wireless communication links. For example, but not limited hereto, any of the following cable types may be used to connect the cameras 310 to the recorders 320: coaxial; twisted pair; and fiber-optic cabling. In current Local Area Networks, twisted pair cabling is the most popular type of cabling, but fiber-optic cabling usage is increasing, especially in high performance networks.

In another aspect, each of the cameras 310 and recorders 320 include a transceiver (such as camera transceiver 313 and recorder transceiver 323) for wireless communication.

While a one-to-one mapping is used from each camera 310 to a respective recorder 320, in other aspects, other mappings may be used so that a single camera output goes to more than one recorder for redundancy, although in some cases the corresponding streams may have different resolutions.

Referring to **FIG. 4****,** an example a dynamic media storage retention system 400 is shown, in accordance with an example aspect.

The dynamic media storage retention system 400 includes a set of cameras 410, a set of recorders 420, each numbered 1 to n, where n is a positive integer, and a control device 430. The set of cameras 410 and the set of recorders 420 are under the control of control device 430. In an aspect, control device 430 is any of a server, a desktop computer, a laptop computer, a smartphone, and so forth.

The set of cameras 410 are for capturing video including primary video streams 102. The set of camera 410 include one or more memories 411 configured to initially store primary video streams 102, one or more processors 412 configured to control the capturing of the primary video streams 102, and a transceiver 413 configured to transmit the primary video streams 102 to the control device 430 and/or one or more of the recorders 420. Auxiliary video streams 112 are transcoded from primary video streams 102 (by the control device 430).

The set of recorders 420 are each enabled with one or more memories 421 for storing primary video streams 102 and auxiliary video streams 112. The set of recorders are further enabled with one or more processors 422 for controlling the storing the of the primary video streams 102 and the auxiliary video streams 112.

The control device 430 includes at least one memory 431, including one or more memories 100, 210, 220, for storing instructions for dynamic media storage retention and one or more processors 432, operatively coupled to the at least one memory 421, including the one or more memories 100, 210, 220, for executing the instructions to perform the dynamic media storage retention. To that end, the control device 430 has control of what primary video streams 102 are transcoded into auxiliary streams 112, at what resolution the auxiliary video streams 112 are transcoded to, when is the transcoding performed (ideally, during processing down times or when processing resources are being used below a threshold amount), when to delete any of the primary video streams 102 and the auxiliary video streams 112, what auxiliary video streams 112 to transcode responsive to an automatic or manually initiated deletion of a primary video stream 102 or a higher resolution auxiliary video stream 112, and so forth. To that end, in any aspect, the one or more processors 432 and the one or more memories 100, 210, 220 may form a transcoder 499. Primary video streams 102 transcoded into auxiliary video streams 112 by control device 430 may then be transmitted by a transceiver 433 to one or more of the recorders 420.

Additionally, as described above, the control device 430 may implement AI logic and/or ML models to intelligently manage the retention and culling of auxiliary video streams based on predicted user interest and content value. The AI and/or ML models are designed to analyze a variety of data points, including user viewing statistics, the frequency and identity of viewers, proximity to important events, and the presence of high-value objects or activities within video scenes. To accomplish these tasks, several types of AI and/or ML models can be employed, each selected and trained according to the specific function they are intended to perform within the system.

For example, for scene and object analysis, convolutional neural networks (CNNs) are particularly well-suited. CNNs are capable of learning and extracting hierarchical features from video frames, such as edges, textures, shapes, and ultimately, complex objects and scenes. These models can be trained on large datasets of labeled images and video clips to recognize objects of interest (e.g., people, doorways, cash registers) and to classify scenes according to their importance or relevance. The training process involves feeding the CNNs with annotated data, allowing the models to learn to associate visual patterns with specific labels or categories. Over time, the models improve their accuracy in detecting and classifying high-value objects and activities, such as identifying a person falling or detecting a crime in progress.

In addition to CNNs, other neural network architectures may be utilized depending on the complexity and requirements of the analysis. For example, recurrent neural networks (RNNs) or long short-term memory networks (LSTMs) can be used to analyze temporal patterns in video streams, such as repeated viewing behavior or activity sequences over time. Generative adversarial networks (GANs) and vision transformers (ViTs) may also be considered for advanced image and scene understanding tasks, especially when dealing with large-scale or highly variable video data.

For user behavior analysis and prediction, supervised learning models such as decision trees, random forests, or gradient boosting machines can be trained on historical usage data. These models can learn to predict which video streams are likely to be accessed in the future based on features such as the number of times a stream has been watched, the titles or roles of viewers (e.g., supervisor vs. regular user), and the timing of views relative to important events. The training data for these models includes logs of user interactions with the video system, annotated with outcomes such as whether a stream was accessed again or deemed important.

The selection of specific AI and/or ML models is guided by the nature of the data and the performance requirements of the system. For visual recognition tasks, deep learning models like CNNs may be preferred due to their high accuracy in image classification and object detection. For behavioral prediction, ensemble models or neural networks may be chosen based on their ability to handle complex, multi-dimensional data and provide reliable forecasts.

Training these models involves collecting and curating representative datasets that reflect the range of scenarios encountered in real-world video recording environments. For object and scene recognition, this means assembling a diverse set of labeled video clips and images. For user behavior prediction, it requires aggregating historical usage logs and annotating them with relevant metadata. The models are then trained using standard ML workflows, including data preprocessing, model selection, hyperparameter tuning, and validation against held-out test sets to ensure generalizability and robustness.

Once trained, the AI and/or ML models are integrated into, for example, the control device 430 of the media storage retention system, where it operates in real time or near-real time to analyze incoming video streams and user interactions. It should be understood that these models could alternatively or additionally be implemented in each recorder, or implemented from another remote device in communication with the system. In any case, the models continuously update their predictions and recommendations for which auxiliary streams to retain, at what resolution, and for how long, thereby optimizing storage usage and ensuring that high-value content remains accessible. The system can also be designed to periodically retrain the models using new data, allowing it to adapt to changing user behaviors and emerging patterns of content interest.

In summary, the control device 430 (or, alternatively or in addition, one or more other devices in the system) may employ a combination of deep learning models for visual analysis and supervised learning models for user behavior prediction, all trained on relevant datasets to perform intelligent, automated retention and culling of video streams. The careful selection and training of these models enable the system to dynamically align storage policies with actual content value and user demand, overcoming the inefficiencies of prior static retention schemes.

The set of cameras 410 are connected to control device 430 which, in turn, is connected to the set of recorders 420. The set of cameras 410 are controlled by the control device 430 as are the set of recorders 420. The set of recorders 420 may be used to provide redundant recordings of different resolutions at different locations, where some recorders 420 may be local to the set of camera 410 and other recorders 420 may be remote from the set of cameras 410, thus implicating transmissions delays and allowing for distributing video streams proximate to predicted users to decrease access times. In an aspect, any of primary or auxiliary storage areas created in the one or more memories 100, 210, 220 of the at least one memory 421 may be configured to provide a quicker access time than the other. For example, one of the primary storage area 101 or the auxiliary storage area 111 may be implemented using a cache and/or so forth while the other of primary or auxiliary storage areas uses a slower access medium such as hard disk and/or so forth.

As used herein, a control device, a processing device, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

A control device 430 as used herein refers to any of the following types of devices including processor(s) and memory(s), microcontroller(s), state machine(s), logic device(s) (programmable logic array, etc.), and so forth.

In an aspect, a computer, smart phone, or other processor enabled device 460 having a user input interface 461 may be used to input information into the recorders 420 via a transceiver 462 to enable the recorders 420 to make decisions including autonomous decisions on what primary streams to transcode and when to transcode (preferably spreading the transcoding costs over time to minimize over utilizing processing resources at any given time).

Cameras 410 and recorders 420 and the control device 430 are connected by one or more communication links 440 which may be wired or wireless communication links. For example, but not limited hereto, any of the following cable types may be used: coaxial; twisted pair; and fiber-optic cabling. In current Local Area Networks, the twisted pair cabling is the most popular type of cabling, but the fiber-optic cabling usage is increasing, especially in high performance networks.

In another aspect, each of the cameras 410 and recorders 420 include a transceiver (camera transceiver 413 and recorder transceiver 423) for wireless communication.

While a one-to-one mapping is used from each camera 410 to a respective recorder 420, in other aspects, other mappings may be used so that a single camera output goes to more than one recorder for redundancy although the corresponding streams may have different resolutions.

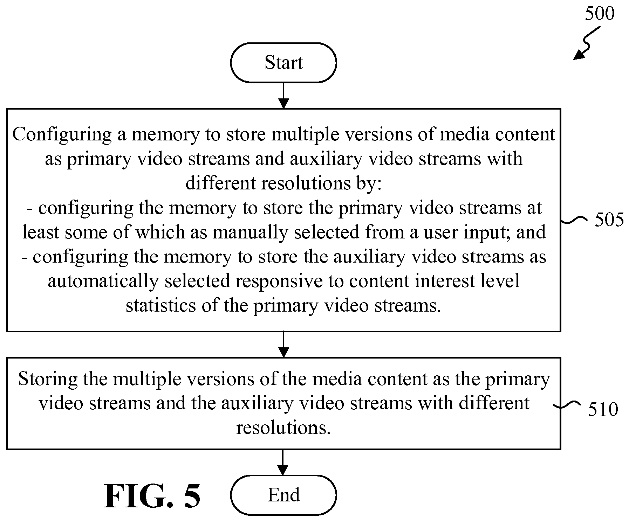

Referring to **FIG. 5****,** an example method 500 for dynamic media storage retention is shown, in accordance with an example aspect. The actions of the method 500 may be performed, for example, by one or any combination of the respective one or more processors 312 and 432, e.g., based on stored instructions in one or any combination of the respective at least one memory 321, 431, including one or more memories 100, 210, 220.

At block 505, the method 500 includes configuring a memory 321, 431 to store multiple versions of media content as primary video streams and auxiliary video streams with different resolutions by: configuring the memory 100, 210, 220 to store the primary video streams at least some of which are manually selected from a user input; and configuring the memory 100, 210, 220 to store the auxiliary video streams as automatically selected responsive to content interest level statistics of the primary video streams.

For example, in one implementation, the configuring at block 505 includes the processors receiving user input via a user interface 331, 461, which allows manual selection of primary video streams for storage in designated primary storage areas. Contemporaneously, the processors are programmed to analyze content interest level statistics-such as viewing frequency, user roles, proximity to significant events, and AI-based scene classification-using embedded AI and/or ML models. Based on this analysis, the processors automatically select and manage the storage of auxiliary video streams in auxiliary storage areas, ensuring that versions with different resolutions are retained according to predicted future demand and content value.

At block 510, the method 500 includes storing the multiple versions of the media content as the primary video streams 102 and the auxiliary video streams 112 with different resolutions.

For example, in one implementation, the storage of multiple versions of media content as primary video streams 102 and auxiliary video streams 112 with different resolutions, as recited in block 510, is accomplished through the coordinated operation of the system's memory devices (such as memory 321, 431, and modules 100, 210, 220) and the processors (322, 432) that control them. The processors execute software instructions that direct the allocation of storage resources within the memory devices, designating specific storage areas for primary and auxiliary streams. Primary video streams 102, which are typically selected based on user input via interfaces 331 or 461, are stored in primary storage areas (e.g., 101, 81). Auxiliary video streams 112, which are generated by transcoding the primary streams to different resolutions, are stored in auxiliary storage areas (e.g., 111, 91). The selection of which auxiliary streams to store, and at what resolutions, is determined automatically by the processors based on content interest level statistics and predictive algorithms, including AI and/or ML model-based analysis of user behavior and scene importance. The system may also dynamically adjust storage allocation and access times between primary and auxiliary areas to optimize performance and meet user or system requirements.

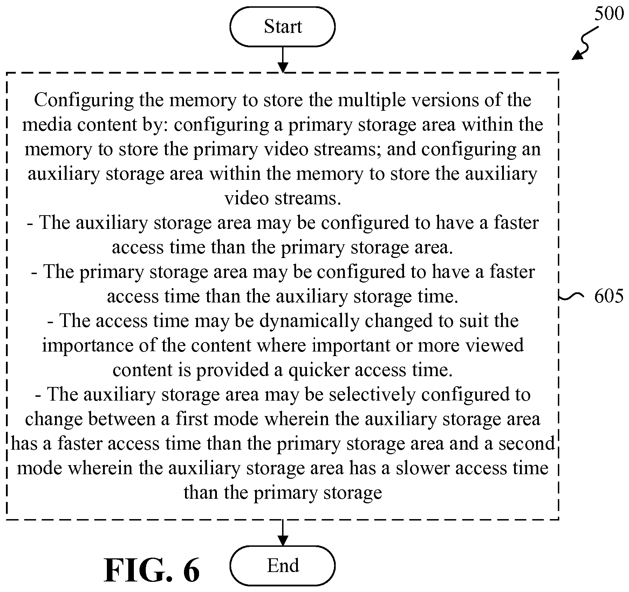

Referring to **FIGS. 6-13****,** further alternative or additional actions of method 500 for dynamic media storage retention are shown, in accordance with an example aspect. The alternative or additional actions are shown by dashed and/or dotted lines.

Referring to **FIG. 6****,** at block 605, an aspect of the method 500 includes configuring the memory 100, 210, 220 to store the multiple versions of the media content by: configuring a primary storage area within the memory 81 to store the primary video streams 102; and configuring an auxiliary storage area 91 within the memory 81 to store the auxiliary video streams 112. In an aspect, the auxiliary storage area 91 may be configured to have a faster access time than the primary storage area 81. In another aspect, the primary storage area 81 may be configured to have a faster access time than the auxiliary storage area 91. In an aspect, the access time may be dynamically changed (by switching between, e.g., different types of storage mediums) to suit the importance of the content where important or more viewed content is provided a quicker access time. In an aspect, the auxiliary storage area 91 is selectively configured to change between a first mode wherein the auxiliary storage area 91 has a faster access time than the primary storage area 81 and a second mode wherein the auxiliary storage area 91 has a slower access time than the primary storage area 81. A user input may change, e.g., mediums used to store the primary and auxiliary storage areas to change the access time of these areas. This may be done to suit user tastes and system needs that meet the requirements and/or expectations of the user.

For example, the described actions in block 605 may be performed to provide a flexible and efficient storage architecture that can be dynamically tailored to the varying importance, frequency of access, and performance requirements associated with different versions of media content. By configuring separate primary and auxiliary storage areas within the memory, the system enables differentiated handling of primary video streams-typically those required for compliance, archival, or user-specified retention-and auxiliary video streams, which are often extra streams, different-resolution, and/or transcoded versions intended for quick access or anticipated future use. The ability to assign faster access times to either storage area, or to dynamically switch access priorities based on content importance or user behavior, ensures that high-value or frequently accessed content can be retrieved with minimal latency, while less critical content can be stored more economically. This dynamic allocation and reconfiguration of storage resources, including the option for user-driven adjustments, allows the system to further optimize both performance and storage efficiency, further reduce operational costs, and better align with user preferences and organizational policies-advantages not achievable with static or undifferentiated storage schemes found in conventional video retention solutions.

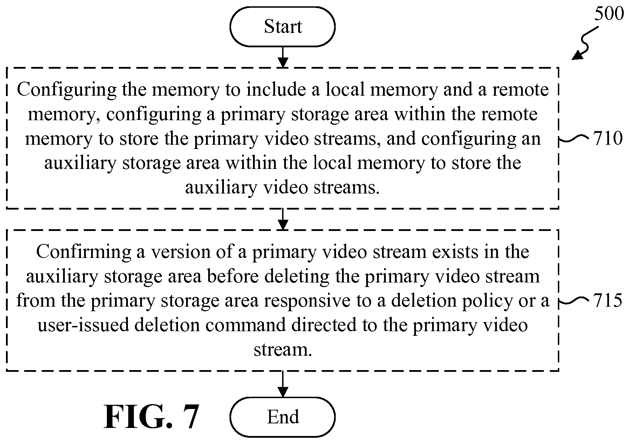

Referring to **FIG. 7****,** at block 710, an aspect of the method 500 includes configuring the memory to include a local memory 220 and a remote memory 210, configuring a primary storage area 81 within the remote memory 210 to store the primary video streams 102, and configuring an auxiliary storage area 91 within the local memory 220 to store the auxiliary video streams 112.

Optionally, at block 715, the method 500 includes confirming a version of a primary video stream 102 exists in the auxiliary storage area 91 before deleting the primary video stream 102 from the primary storage area 81 responsive to a deletion policy or a user-issued deletion command directed to the primary video stream 102. In this way, it can be ensured that at least one copy is saved to storage (in auxiliary storage area 91) before a copy is deleting a primary video stream 102 from primary storage area 81.

The actions described at block 710 and block 715 may be performed to enhance both the reliability and efficiency of media content storage and retention. By configuring the memory system to utilize both a local memory (for auxiliary video streams) and a remote memory (for primary video streams), the architecture enables strategic distribution of content based on its intended use, access frequency, and performance requirements. Storing primary video streams in remote memory can support compliance, archival, or centralized management needs, while keeping auxiliary streams locally allows for faster access and reduced latency for anticipated or frequent user requests. The optional step at block 715, which involves confirming that a version of the primary video stream exists in the auxiliary storage area before deleting the original from the primary storage area, serves as a safeguard to prevent data loss and ensure content availability. This approach guarantees that at least one version of the video stream remains accessible, even as storage policies or user actions trigger deletion of the primary copy. Together, these actions provide a robust framework for further balancing storage efficiency, data redundancy, and/or user access needs, thereby supporting both operational flexibility and data integrity in dynamic media storage environments.

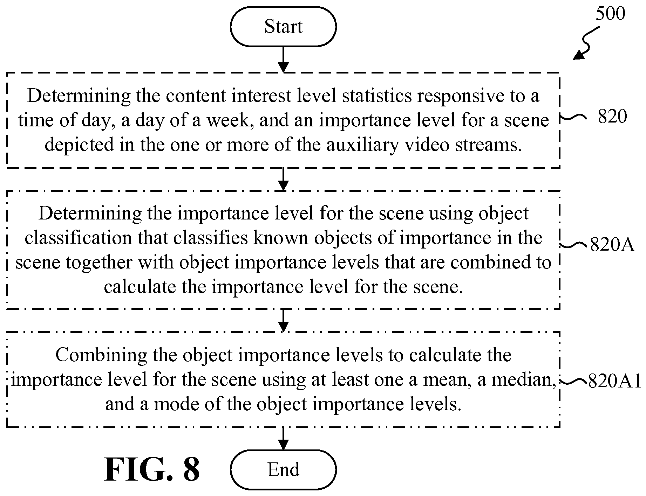

Referring to **FIG. 8****,** in another alternative or additional aspect, at block 820, the method 500 includes determining the content interest level statistics responsive to a time of day, a day of a week, and an importance level for a scene depicted in the one or more of the auxiliary video streams 112.

In an aspect, block 820 may include block 820A.

At block 820A, the method 500 includes determining the importance level for the scene using object classification that classifies known objects of importance in the scene together with object importance levels that are combined to calculate the importance level for the scene. Any number of importance levels can be used.

In an aspect block 820A may include block 820A1.

At block 820A1, the method 500 includes combining the object importance levels to calculate the importance level for the scene using at least one a mean, a median, and a mode of the object importance levels.

The actions described in blocks 820, 820A, and 820A1 may be performed to enable intelligent and context-aware retention of media content by dynamically assessing the relevance and value of video streams. By determining content interest level statistics based on factors such as the time of day, day of the week, and the importance level of scenes depicted in auxiliary video streams, the system can prioritize which content should be retained longer or made more readily accessible. The use of object classification to identify and assign importance levels to known objects within a scene allows the system to quantify the significance of recorded events or features, ensuring that high-value or high-interest content is distinguished from routine or less important footage. By further combining these object importance levels using statistical measures such as the mean, median, or mode, the system can generate a robust and nuanced assessment of scene importance, supporting more accurate and effective retention decisions. This approach further optimizes storage resources by focusing retention efforts on content most likely to be of interest or value to users, while also further supporting compliance, operational efficiency, and/or user satisfaction in dynamic media storage environments.

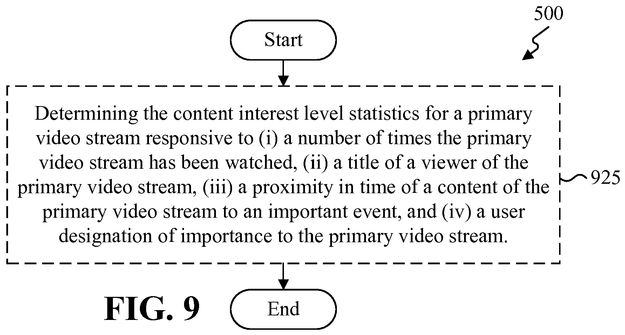

Referring to **FIG. 9****,** in another alternative or additional aspect, at block 925, the method 500 includes determining the content interest level statistics for a primary video stream 102 responsive to (i) a number of times the primary video stream 102 has been watched, (ii) a title of a viewer of the primary video stream 102, (iii) a proximity in time of a content of the primary video stream 102 to an important event, and (iv) a user designation of importance to the primary video stream 102. In an aspect, with respect to (i), the number of times the primary video stream 102 has been watched can be determined with respect to a threshold such that only viewings over the threshold number of viewings are counted. In an aspect, with respect to (iii), the proximity in time of a content of the primary video stream 102 to an important event can be a user adjusted time. In an aspect, a table of time periods for corresponding events is stored and compared to a current event (that is dynamically identified by pattern matching or identified by user input) so that, for example, for a swearing in ceremony, a different time period may be used for recording than a graduation ceremony.

The actions described in block 925 may be performed to enable the system to make informed, data-driven decisions about which primary video streams should be prioritized for retention based on their demonstrated or anticipated value to users. By evaluating factors such as how frequently a video stream has been watched, the status or role of the viewer (e.g., supervisor versus regular user), the temporal proximity of the video content to significant events, and explicit user designations of importance, the system can identify content that is likely to be of higher relevance or interest. Incorporating thresholds for view counts ensures that only genuinely popular or repeatedly accessed streams are flagged, while allowing user-adjustable time windows for event proximity and maintaining a table of event-specific periods provides flexibility and precision in identifying critical footage. This multifaceted approach ensures that storage resources are allocated with even further efficiently, with high-value or high-interest content retained longer or made more accessible, thereby further reducing unnecessary storage of less important footage and further enhancing the overall effectiveness and responsiveness of the media retention system.

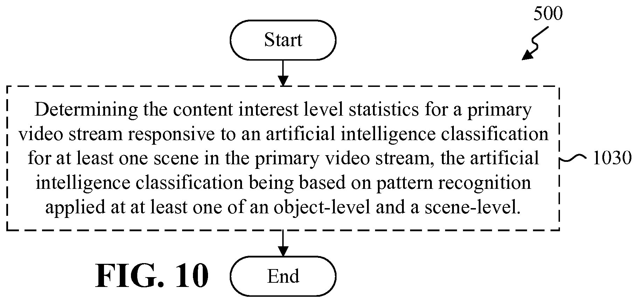

Referring to **FIG. 10****,** in another alternative or additional aspect, at block 1030, the method 500 includes determining the content interest level statistics for a primary video stream 102 responsive to an artificial intelligence classification for at least one scene in the primary video stream 102, the artificial intelligence classification being based on pattern recognition applied at at least one of an object-level and a scene-level.

In an aspect, one or more convolutional neural networks (CNNs) are used to learn and extract hierarchical features from the recorded images for image classification and object detection. Key features of CNNs for image processing:
- Convolutional layers: These layers use filters (kernels) to scan the image and detect features like edges, textures, and shapes.
- Pooling layers: These layers reduce the spatial size of the feature maps, making the network more robust to variations in image scale and orientation.
- Fully connected layers: These layers combine the learned features to make predictions about the image.
- Hierarchical feature extraction: CNNs learn features at different levels of abstraction, starting with low-level features like edges and then combining them to learn higher-level features like objects and scenes.

In another aspect, a different type of neural network may be used, such as any of a generative neural network (GAN), a recursive neural network (RNN), and vision transformers (ViTs).

The actions described in block 1030 may be performed to enable the system to intelligently assess the value or relevance of video content by leveraging advanced artificial intelligence techniques, specifically pattern recognition at both the object and scene levels. By applying artificial intelligence classification-such as convolutional neural networks (CNNs), which are capable of extracting and learning hierarchical features from video frames-the system can automatically identify and categorize important objects, activities, or contextual elements within a scene. This process involves using convolutional layers to detect fundamental visual features, pooling layers to enhance robustness to scale and orientation, and fully connected layers to synthesize these features into meaningful predictions about the content. Hierarchical feature extraction allows the system to move from simple visual cues to complex scene understanding, ensuring that content with high-value objects or significant activities is recognized even if not explicitly flagged by users. The use of alternative neural network architectures, such as GANs, RNNs, or vision transformers, further broadens the system's ability to analyze diverse types of video data. Ultimately, these actions are performed to further automate and enhance the identification of high-interest or high-importance video streams, allowing the storage retention system to further prioritize, retain, or make more accessible those streams most likely to be needed for review, compliance, or security purposes, while efficiently managing storage resources by deprioritizing less significant content.

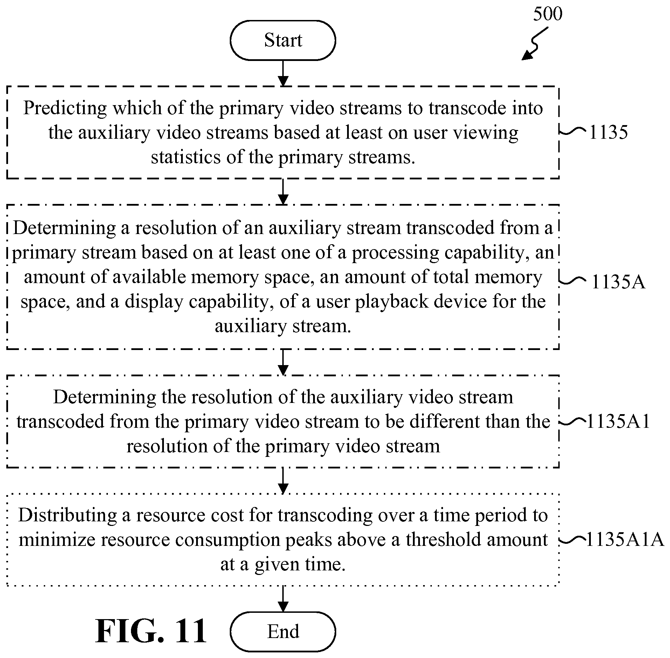

Referring to **FIG. 11****,** in another alternative or additional aspect, at block 1135, the method 500 includes predicting which of the primary video streams 102 to transcode into the auxiliary video streams 112 based at least on user viewing statistics of the primary video streams 102.

In an aspect, block 1135 may include block 1135A.

At block 1135A, the method 500 includes determining a resolution of an auxiliary video stream 112 transcoded from a primary stream 102 based on at least one of a processing capability, an amount of available memory space, an amount of total memory space, and a display capability, of a user playback device for the auxiliary video stream 112.

In an aspect, block 1135A may include block 1135A1.

At block 1135A1, the method 500 includes determining the resolution of the auxiliary video stream 112 transcoded from the primary video stream 102 to be different than the resolution of the primary video stream 102.

In an aspect, block 1135A1 may include block 1135A1A.

At block 1135A1A, the method 500 includes distributing a resource cost for transcoding over a time period to minimize resource consumption peaks above a threshold amount at a given time. In an aspect, transcoding is performed during non-streaming times when processing power is typically lower as compared to streaming times.

The actions described in FIG. 11 and its associated blocks may be performed to optimize the efficiency and responsiveness of the media storage retention system by intelligently managing the creation and storage of auxiliary video streams. By predicting which primary video streams are likely to be requested in the future-using user viewing statistics such as frequency of access, device type, and user roles-the system can proactively transcode and store auxiliary streams in resolutions that best match the anticipated playback environment. This approach ensures that video content is readily available in the most suitable format for different user devices, taking into account factors like processing capability, available memory, and display resolution, thereby enhancing user experience and reducing unnecessary storage of high-resolution content where it is not needed. Additionally, by determining when and how to transcode-such as performing resource-intensive transcoding tasks during periods of low system demand-the system distributes processing loads more evenly, avoiding performance bottlenecks and minimizing operational costs. Overall, these actions are performed to deliver relevant video content more efficiently, to further conserve storage and processing resources, and further ensure that the system remains scalable and responsive to varying user needs and infrastructure constraints.

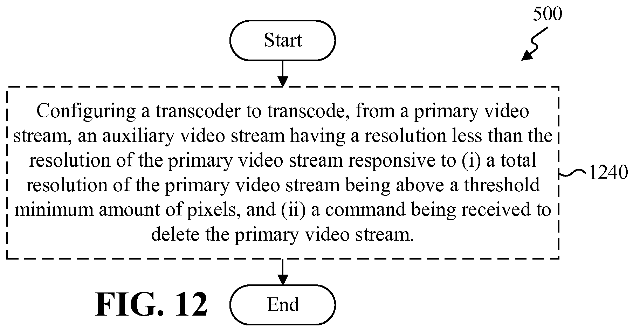

Referring to **FIG. 12****,** in another alternative or additional aspect, at block 1240, the method 500 includes configuring a transcoder 399, 499 to transcode, from a primary video stream 102, an auxiliary video stream 112 having a resolution less than the resolution of the primary video stream 102 responsive to (i) a total resolution of the primary video stream 102 being above a threshold minimum amount of pixels, and (ii) a command being received to delete the primary video stream 102.

The actions described in FIG. 12 may be performed to ensure that valuable video content is preserved in a storage-efficient manner when a primary video stream is slated for deletion. By configuring the transcoder to generate an auxiliary video stream with a lower resolution from a high-resolution primary stream-specifically when the primary stream exceeds a certain pixel threshold and a deletion command is received-the system retains a version of the content that is more economical in terms of storage space while still maintaining access to the essential information contained in the original recording. This approach allows the system to balance the need for long-term retention of important video data with the practical limitations of finite storage resources. It also provides a safeguard against the complete loss of content by ensuring that, even as high-resolution streams are removed to free up space or comply with retention policies, a lower-resolution version remains available for future reference or review. These actions further support efficient storage management, further reduce operational costs, and further maintain system responsiveness by automatically adapting the retention strategy based on content characteristics and user or system-initiated deletion events.

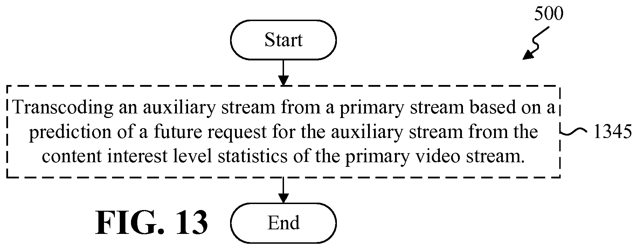

Referring to **FIG. 13****,** in another alternative or additional aspect, at block 1345, the method 500 includes transcoding an auxiliary video stream 112 from a primary video stream 102 based on a prediction of a future request for the auxiliary video stream 112 from the content interest level statistics of the primary video stream 102.

The actions described in FIG. 13 may be performed to proactively optimize storage and access to video content by leveraging predictive analytics regarding future user needs. By transcoding an auxiliary video stream from a primary video stream based on predictions derived from content interest level statistics-such as how often the content has been viewed, who has viewed it, its proximity to important events, or AI-driven scene analysis-the system anticipates which video streams are likely to be requested in the future and prepares lower-resolution or otherwise optimized versions in advance. This predictive approach minimizes the need for on-demand transcoding, which can be resource-intensive and cause delays, and ensures that relevant content is readily available in a format suitable for the anticipated playback device or user scenario. In sum, these actions further enhance system efficiency, further reduce processing and storage costs, and further improve a user experience by ensuring that the most relevant and likely-to-be-accessed video streams are maintained in an accessible and storage-efficient manner, all while dynamically adapting to changing patterns of content usage and interest.

In one example implementation, the described aspects include an integrated hardware-and-software architecture that enables a video-recording system to store, manage, and deliver multiple versions of the same media content while automatically allocating additional storage resources to those versions that are most likely to be useful in the future. A set of cameras first captures high-definition primary video streams; each camera contains memory for buffering the raw stream, a processor that controls image capture parameters, and a transceiver that forwards the primary streams to one or more associated recorders. Each recorder houses at least one memory device that is logically partitioned into a primary storage area and an auxiliary storage area, one or more processors, and a transcoder implemented in software and/or dedicated circuitry. Upon receipt of the camera output, the recorder stores an unaltered copy of each primary stream in the primary storage area pursuant to user-defined retention rules. In parallel, the recorder's processor executes instructions that evaluate "content-interest statistics" derived from historic client behavior-such as the number of times a segment was viewed, the identity or privilege level of viewers, the type of playback device used, temporal proximity to alarms or other events, and scene-level object classifications produced by one or more AI and/or ML models. The processor is able to perform these evaluations and predictions by applying AI and/or ML models, and/or related statistical analysis, to the collected client usage metrics. For example, the processor may use machine learning algorithms, such as convolutional neural networks for scene and object classification, and statistical models to analyze viewing patterns, user roles, and event proximity. By combining these data sources, the processor generates predictions about which portions of the primary streams are likely to be requested again and at what resolution. Based on these predictions, the processor then commands the transcoder to generate one or more auxiliary streams, which may be of lower resolution, from the corresponding primary streams. These auxiliary streams are deposited in the auxiliary storage area, which may reside in the same physical memory device as the primary area or in a separate, faster-access local memory, while the primary area may reside in a larger, slower, or remote memory. The system continuously monitors available capacity in each area. When the primary area approaches capacity or a user issues a deletion command, the processor confirms that a corresponding auxiliary version already exists; if so, it can safely delete or down-sample the older primary version. Conversely, when the auxiliary area approaches its allotted limit, the processor consults updated interest statistics to determine which auxiliary versions have fallen below a predefined value threshold and can therefore be culled, thereby freeing space for new auxiliary transcodes. In an aspect, all or a portion of the transcoding tasks are scheduled during periods of low processor utilization so that resource peaks remain below a predetermined threshold. Through this cooperative operation among cameras, recorders, memories, processors, transcoders, and client-side devices, the described aspects dynamically balance high-quality archival requirements with low-latency user access, minimize unnecessary transcoding, and automatically maximize useful retention of video material while respecting finite local or cloud storage budgets.

The described aspects are designed for broad applicability across various security and access control environments, including but not limited to commercial buildings, critical infrastructure, and sensitive facilities such as data centers. For example, in a data center environment, the system can be utilized to intelligently manage the retention and accessibility of video surveillance footage by dynamically storing multiple versions of video streams-such as high-resolution primary streams and lower-resolution auxiliary streams-based on predicted interest and importance. For example, video footage covering high-value areas like server rooms, access points, or equipment racks can be prioritized for longer retention and faster access if AI analysis or user activity indicates heightened interest, such as repeated viewing by authorized personnel, proximity to security events (e.g., unauthorized access attempts), or detection of critical objects or activities within the scene. By automatically adjusting storage policies and transcoding strategies according to real-time and historical usage patterns, the system ensures that relevant video evidence is readily available for security audits, incident investigations, or compliance requirements, while optimizing storage resources and minimizing operational costs. This dynamic, intelligent approach enhances both the security and operational efficiency of various security and access control environments, such as data center environments, by ensuring that the most pertinent video content is preserved and accessible when needed.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1. A method for dynamic media storage retention, comprising: configuring a memory to store multiple versions of media content as primary video streams and auxiliary video streams with different resolutions by: configuring the memory to store the primary video streams at least some of which are manually selected from a user input; and configuring the memory to store the auxiliary video streams as automatically selected responsive to content interest level statistics of the primary video streams, and storing the multiple versions of the media content as the primary video streams and the auxiliary video streams with different resolutions.

Embodiment 2. The method according to Embodiment 1, wherein configuring the memory to store the multiple versions of the media content comprises: configuring a primary storage area within the memory to store the primary video streams; and configuring an auxiliary storage area within the memory to store the auxiliary video streams, and wherein the auxiliary storage area is selectively configured to change between a first mode wherein the auxiliary storage area has a faster access time than the primary storage area and a second mode wherein the auxiliary storage area has a slower access time than the primary storage..

Embodiment 3. The method according to Embodiment 1 or 2, wherein the memory comprises a local memory and remote memory, and configuring the memory to store the multiple versions of the media content comprises: configuring a primary storage area within the remote memory to store the primary video streams; and configuring an auxiliary storage area within the local memory to store the auxiliary video streams.

Embodiment 4. The method according to any of Embodiment 1 to 3, further comprising confirming a version of a primary video stream exists in the auxiliary storage area before deleting the primary video stream from the primary storage area responsive to a deletion policy or a user-issued deletion command directed to the primary video stream.

Embodiment 5. The method according to any of Embodiment 1 to 4, further comprising determining the content interest level statistics responsive to a time of day, a day of a week, and an importance level for a scene depicted in the one or more of the auxiliary video streams.

Embodiment 6. The method according to any of Embodiment 1 to 5, wherein the importance level for the scene is determined using object classification that classifies known objects of importance in the scene together with object importance levels that are combined to calculate the importance level for the scene.

Embodiment 7. The method according to any of Embodiment 1 to 6, wherein the object importance levels are combined to calculate the importance level for the scene using at least one a mean, a median, and a mode of the object importance levels.

Embodiment 8. The method according to any of Embodiment 1 to 7, further comprising determining the content interest level statistics for a primary video stream responsive to (i) a number of times the primary video stream has been watched, (ii) a title of a viewer of the primary video stream, (iii) a proximity in time of a content of the primary video stream to an important event, and (iv) a user designation of importance to the primary video stream.

Embodiment 9. The method according to any of Embodiment 1 to 8, further comprising determining the content interest level statistics for a primary video stream responsive to an artificial intelligence classification for at least one scene in the primary video stream, the artificial intelligence classification being based on pattern recognition applied at at least one of an object-level and a scene-level.

Embodiment 10. The method according to any of Embodiment 1 to 9, further comprising predicting which of the primary video streams to transcode into the auxiliary video streams based at least on user viewing statistics of the primary streams.

Embodiment 11. The method according to any of Embodiment 1 to 10 further comprising determining a resolution of an auxiliary stream transcoded from a primary stream based on at least one of a processing capability, an amount of available memory space, an amount of total memory space, and a display capability, of a user playback device for the auxiliary stream.

Embodiment 12. The method according to any of Embodiment 1 to 11, further comprising determining the resolution of the auxiliary video stream transcoded from the primary video stream to be different than the resolution of the primary video stream.

Embodiment 13. The method according to any of Embodiment 1 to 12, wherein a resource cost for transcoding is distributed over a time period to minimize resource consumption peaks above a threshold amount at a given time.

Embodiment 14. The method according to any of Embodiment 1 to 13, further comprising configuring a transcoder to transcode, from a primary video stream, an auxiliary video stream having a resolution less than the resolution of the primary video stream responsive to (i) a total resolution of the primary video stream being above a threshold minimum amount of pixels, and (ii) a command being received to delete the primary video stream.

Embodiment 15. The method according to any of Embodiment 1 to 14, further comprising transcoding an auxiliary video stream from a primary stream based on a prediction of a future request for the auxiliary video stream from the content interest level statistics of the primary video stream.

Embodiment 16. A system for dynamic media storage retention, comprising: one or more memories configured to store multiple versions of media content as primary video streams and auxiliary video streams with different resolutions by storing (i) the primary video streams at least some of which are manually selected from a user input, and (ii) the auxiliary video streams as automatically selected responsive to content interest level statistics of the primary video streams; and one or more processors configured to (i) select at least some of the primary video streams responsive to the user input and (ii) automatically select the auxiliary video streams responsive to content interest level statistics of the primary video streams.

Embodiment 17. The system according to Embodiment 16, wherein the one or more memories are configured to store to store the primary video streams in a primary storage area within the memory and the auxiliary video streams in an auxiliary storage area within the memory, and wherein the auxiliary storage area is selectively configured to change between a first mode wherein the auxiliary storage area has a faster access time than the primary storage area and a second mode wherein the auxiliary storage area has a slower access time than the primary storage.

Embodiment 18. The system according to any of Embodiment 1 to 17, wherein the one or more memories comprises one or more local memories and one or more remote memories, wherein the one or more remote memories include a primary storage area configured to store the primary video streams, and wherein the one or more local memories include an auxiliary storage area configured to store the auxiliary video streams.

Embodiment 19. The system according to any of Embodiment 1 to 18, wherein the one or more processors are further configured to confirm a version of a primary video stream exists in the auxiliary storage area before causing a deletion of the primary video stream from the primary storage area responsive to a deletion policy or a user-issued deletion command directed to the primary video stream.

Embodiment 20. The system according to any of Embodiment 1 to 19, wherein the one or more processors are further configured to determine the content interest level statistics responsive to a time of day, a day of a week, and an importance level for a scene depicted in the one or more of the auxiliary video streams.

Embodiment 21. A system for dynamic media storage retention, comprising one or more processors configured to perform the method of any of Embodiment 1 to 15.

Embodiment 22. A system for dynamic media storage retention, comprising one or more means for performing the method of any of Embodiment 1 to 15.

Embodiment 23. A computer-readable medium for dynamic media storage retention, comprising stored instructions executable by one or more processors to perform the method of any of Embodiment 1 to 15.

Aspects of the present disclosure may be implemented as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object-oriented programming language, and conventional procedural programming languages.

Aspects of the present disclosure are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various aspects of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It should also be noted that in this Specification, references to various features (e.g., elements, structures, modules, components, steps, operations, characteristics, etc.) included in "one aspect", "example aspect", "an aspect", "another aspect", "some aspects", "various aspects", "other aspects", "alternative aspect", and the like are intended to mean that any such features are included in one or more aspects of the present disclosure, but may or may not necessarily be combined in the same aspects.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

Note that all optional features of the device and system described above may also be implemented with respect to the method or process described herein and specifics in the examples may be used anywhere in one or more aspects.

## Claims

1. A method for dynamic media storage retention, comprising:
configuring a memory to store multiple versions of media content as primary video streams and auxiliary video streams with different resolutions by:
configuring the memory to store the primary video streams at least some of which are manually selected from a user input; and
configuring the memory to store the auxiliary video streams as automatically selected responsive to content interest level statistics of the primary video streams; and
storing the multiple versions of the media content as the primary video streams and the auxiliary video streams with different resolutions.

2. The method according to claim 1, wherein configuring the memory to store the multiple versions of the media content comprises:
configuring a primary storage area within the memory to store the primary video streams; and
configuring an auxiliary storage area within the memory to store the auxiliary video streams, and
wherein the auxiliary storage area is selectively configured to change between a first mode wherein the auxiliary storage area has a faster access time than the primary storage area and a second mode wherein the auxiliary storage area has a slower access time than the primary storage.

3. The method according to claim 1 or 2, wherein the memory comprises a local memory and remote memory, and configuring the memory to store the multiple versions of the media content comprises:
configuring a primary storage area within the remote memory to store the primary video streams; and
configuring an auxiliary storage area within the local memory to store the auxiliary video streams.

4. The method according to any of claims 1 to 3, further comprising confirming a version of a primary video stream exists in the auxiliary storage area before deleting the primary video stream from the primary storage area responsive to a deletion policy or a user-issued deletion command directed to the primary video stream.

5. The method according to any of the preceding claims, further comprising determining the content interest level statistics responsive to a time of day, a day of a week, and an importance level for a scene depicted in one or more of the auxiliary video streams.

6. The method according to claim 5, wherein the importance level for the scene is determined using object classification that classifies known objects of importance in the scene together with object importance levels that are combined to calculate the importance level for the scene, optionally wherein the object importance levels are combined to calculate the importance level for the scene using at least one a mean, a median, and a mode of the object importance levels.

7. The method according to any of the preceding claims, further comprising
determining the content interest level statistics for a primary video stream responsive to (i) a number of times the primary video stream has been watched, (ii) a title of a viewer of the primary video stream, (iii) a proximity in time of a content of the primary video stream to an important event, and (iv) a user designation of importance to the primary video stream, and/or
further comprising determining the content interest level statistics for a primary video stream responsive to an artificial intelligence classification for at least one scene in the primary video stream, the artificial intelligence classification being based on pattern recognition applied at at least one of an object-level and a scene-level.

8. The method according to any of the preceding claims, further comprising predicting which of the primary video streams to transcode into the auxiliary video streams based at least on user viewing statistics of the primary video streams.

9. The method according to claim 8, further comprising determining a resolution of an auxiliary video stream transcoded from a primary video stream based on at least one of a processing capability, an amount of available memory space, an amount of total memory space, and a display capability, of a user playback device for the auxiliary video stream, optionally further comprising determining the resolution of the auxiliary video stream transcoded from the primary video stream to be different than the resolution of the primary video stream.

10. The method according to claim 8, further comprising distributing a resource cost for transcoding over a time period to minimize resource consumption peaks above a threshold amount at a given time.

11. The method according to any of the preceding claims, further comprising configuring a transcoder to transcode, from a primary video stream, an auxiliary video stream having a resolution less than the resolution of the primary video stream responsive to (i) a total resolution of the primary video stream being above a threshold minimum amount of pixels, and (ii) a command being received to delete the primary video stream, and/or further comprising transcoding an auxiliary video stream from a primary video stream based on a prediction of a future request for the auxiliary video stream from the content interest level statistics of the primary video stream.

12. A system for dynamic media storage retention, comprising:
one or more memories configured to store multiple versions of media content as primary video streams and auxiliary video streams with different resolutions by storing (i) the primary video streams at least some of which are manually selected from a user input, and (ii) the auxiliary video streams as automatically selected responsive to content interest level statistics of the primary video streams; and
one or more processors configured to (i) select at least some of the primary video streams responsive to the user input and (ii) automatically select the auxiliary video streams responsive to the content interest level statistics of the primary video streams.

13. The system according to claim 12, wherein the one or more memories are configured to store to store the primary video streams in a primary storage area and the auxiliary video streams in an auxiliary storage area, and wherein the auxiliary storage area is selectively configured to change between a first mode wherein the auxiliary storage area has a faster access time than the primary storage area and a second mode wherein the auxiliary storage area has a slower access time than the primary storage area.

14. The system according to claim 12 or 13, wherein the one or more memories comprises one or more local memories and one or more remote memories, wherein the one or more remote memories include a primary storage area configured to store the primary video streams, and wherein the one or more local memories include an auxiliary storage area configured to store the auxiliary video streams, optionally wherein the one or more processors are further configured to confirm a version of a primary video stream exists in the auxiliary storage area before causing a deletion of the primary video stream from the primary storage area responsive to a deletion policy or a user-issued deletion command directed to the primary video stream.

15. The system according to any of claims 12 to 14, wherein the one or more processors are further configured to determine the content interest level statistics responsive to a time of day, a day of a week, and an importance level for a scene depicted in one or more of the auxiliary video streams.
